# EUROPÄISCHE PATENTSCHRIFT

(11) **EP 0 652 192 B1**
(45) Veröffentlichungstag und Bekanntmachung des Hinweises auf die Patenterteilung: **16.06.1999**
(21) Anmeldenummer: 94104140.2
(22) Anmeldetag: 17.03.1994
(51) Int. Cl.: C05D 3/02, C05F 7/00, C05F 11/00

(54) **Verfahren zum Herstellen eines Mittels zum Düngen und Verbessern von Böden**
Process of manufacturing a fertiliser and soil conditioner material
Procédé de préparation d'un matériau fertilisant et d'amélioration du sol

(30) Priorität: 08.11.1993 DE 4338007
(43) Veröffentlichungstag der Anmeldung: 10.05.1995
(73) Patentinhaber: Holland, Rainer, D-76829 Landau (DE); Steigner, Rolf, D-76831 Billigheim-Ingenheim (DE); Klose, Ingeborg, D-56626 Andernach (DE)
(72) Erfinder: Holland, Rainer, D-76829 Landau (DE); Steigner, Rolf, D-76831 Billigheim-Ingenheim (DE); Klose, Ingeborg, D-56626 Andernach (DE)
(74) Vertreter: Patentanwälte Möll und Bitterich

(56) Entgegenhaltungen:
- EP-A- 0 258 208
- DE-A- 2 847 016
- DE-A- 3 921 805
- DE-A- 4 211 013
- Fertilizers and Fertilization, A.Finck, Seite 51

## Beschreibung

Die Erfindung betrifft Verfahren zum Herstellen eines Düngemittels für Kulturpflanzen und Verbesserungsmittel für Böden gemäß dem Oberbegriff des Anspruchs 1.

Seit es Kläranlagen gibt, ist die Beseitigung des darin entstehenden Klärschlamms ein Problem, dessen Lösung auch schon viele Erfinder beschäftigt hat. So ist bereits durch die DE-C-495 188 ein Verfahren bekannt geworden, Faulschlamm aus kommunalen Abwässern mit Ätzkalk zu behandeln. Der Ätzkalk entzieht dem Klärschlamm einen Teil des kolloidal gebundenen Wassers; zum andern wird beim Löschen des Kalks Wärme frei, die zu einer weiteren Trocknung führt. Die Trocknung wurde noch dadurch unterstützt, daß heiße Feuerungsgase, insbesondere von Kalköfen, durch die Mischung von Faulschlamm und Kalk geleitet wurde. Offenbar war dieses Verfahren jedoch entweder nicht wirtschaftlich oder das dabei entstandene Produkt nicht brauchbar, denn es konnte sich in der Praxis nicht durchsetzen. Dies kann unter anderem darin begründet sein, daß Faulschlamm durch anaerobe Gärung entsteht, während Klärschlamm das Endprodukt eines aeroben Prozesses ist.

In der DE-C-851 070 wird vorgeschlagen, Klärschlamm als Düngemittel zu verwenden, wobei gegebenenfalls aus Müll gewonnener Kompost zugesetzt werden soll. Diese Düngemittel besitzen jedoch zum einen nur wenig Stickstoff, Phosphor und Kali und sind zum anderen aufgrund ihres hohen Gehaltes an organischer Substanz schwierig zu handhaben und zu verarbeiten. Der Verbraucher war daher nicht bereit, diese Produkte abzunehmen.

In der DE-B-11 45 646 wird vorgeschlagen, Klärschlamm und Müll zu vermengen und zu lagerbeständigen Preßlingen zu verarbeiten, die zu einem späteren Zeitpunkt zerkleinert und als Bodenverbesserungsmittel dienen sollen.

In der DE-C-28 50 607 wird ein Verfahren beschrieben, bei dem durch starkes Entwässern verfestigter Klärschlamm mechanisch zerkleinert und mit gebranntem Kalk bestreut wird. Dadurch soll ein Produkt mit krümeliger Struktur entstehen, ohne daß die Kalk-Schlamm-Masse nach der Kalkzugabe nochmals umgesetzt, zwischengelagert und/oder zerkleinert werden sollte.

Aus der DE-A-35 18 905 ist ein Verfahren zur Herstellung eines organisch-mineralischen Mischdüngers unter Verwendung von Klärschlamm aus Kläranlagen bekannt, bei dem der Klärschlamm zunächst auf einen Wassergehalt von unter 50 % getrocknet, mit gelöschtem Kalk und mineralischen Düngern versetzt und schließlich einer Wärmebehandlung zwischen 300 und 600 °C über 10 bis 30 Minuten unterworfen wird. Danach wird das Produkt gekühlt, zerkleinert und sortiert. Es versteht sich, daß das Endprodukt wegen der langen und extrem hohen Temperaturbehandlung hygienisch einwandfrei und auch stark entwässert ist. Nachteilig ist jedoch der hohe Energiebedarf. Auch hat sich herausgestellt, daß es nicht immer von Vorteil ist, wenn das Endprodukt vollständig getrocknet ist; es kann technologisch von Vorteil sein, eine Restfeuchte beizubehalten.

Das gattungsgemäße Verfahren zum Herstellen eines Düngemittels für Kulturpflanzen und Verbesserungsmittels für Böden durch intensives, gezieltes Vermischen von organischen Siedlungsabfällen, darunter jedenfalls Klärschlamm, mit organischem Material mit spezifisch großer, sorptiver Oberfläche, mineralischen Nährstoffträgern und basisch wirkenden Stoffen, darunter jedenfalls Calciumoxid, ist bekannt aus der EP-A-0 285 208. Der zur Herstellung dieses Düngungsmittels verwendete Klärschlamm hat einen Wassergehalt von größer 95 %. In Verbindung mit Sägemehl und Branntkalk entsteht eine Art Kalkmörtel, die sehr hart ist und sich nur sehr langsam zersetzt.

Aus der DE-A-39 21 805 ist ein Düngemittel bekannt, das im wesentlichen aus Gips und der Asche von Braunkohle besteht. Infolge des sauren Regens enthalten viele Böden bereits zum jetzigen Zeitpunkt viel Schwefel. Die Anwendung des in der DE-A-39 21 805 beschriebenen Düngemittels würde den hohen Schwefelgehalt weiter erhöhen. Aus diesem Grunde sind jedenfalls in Deutschland Mittel, die Gips enthalten, zur Behandlung der übersäuerten Waldböden nicht zugelassen.

Aus der DE-A-28 47 016 ist ein Mittel bekannt, welches durch das Vermischen und Verrühren von Gülle bzw. flüssigem Klärschlamm, gemahlenem Stroh und Branntkalk entsteht. Die Zusammensetzung dieses Produkts entspricht im wesentlichen dem bereits in der EP-A-0 285 208 beschriebenen Produkt; es besitzt daher auch dessen Eigenschaften und Nachteile.

Der vorliegenden Erfindung liegt die Aufgabe zugrunde, das gattungsgemäße Verfahren derart weiterzubilden, daß ohne besondere Verarbeitungsmaßnahmen, allein durch die gezielte Zugabe eines speziellen organischen Bestandteils, ein hygienisch einwandfreies und lager-, transport- und streustabiles Endprodukt mit den richtigen Düngungseigenschaften erhalten wird.

Diese Aufgabe wird gelöst durch ein Verfahren mit den Merkmalen des Anspruchs 1.

Der vorliegenden Erfindung liegt die Erkenntnis zugrunde, daß es genauso falsch ist, organische Siedlungsabfälle, insbesondere Klärschlamm, unentwässert, d. h. mit hohem Feuchtigkeitsgehalt zu verarbeiten, wie es falsch ist, die Feuchtigkeit so weit wie technisch möglich zu reduzieren. Vielmehr sollte das Ausgangsprodukt einen Feuchtigkeitsgehalt von 50 - 70 Gew.% haben. Dies bedeutet, daß den Siedlungsabfällen unter Umständen Wasser zugeführt werden muß, falls die Eigenfeuchtigkeit für die Homogenisierung der Mischungspartner sowie die Hydratbildung aus Calciumoxid nicht ausreichen sollte.

Der Erfindung liegt des weiteren die an sich bekannte Erkenntnis zugrunde, daß durch die Zugabe einer ausreichenden Menge an Calciumoxid in dem Mischprodukt eine Temperatursteigerung stattfindet, die ausreicht, um in den organischen Siedlungsabfällen etwa vorhandene schädliche organische Stoffe sowie Krankheitserreger abzutöten. Wie Versuche gezeigt haben, sind Temperaturen von 60 bis 70 °C ohne weiteres zu erreichen. Gleichzeitig entsteht eine starke Base, die die oben genannte hygienisierende Wirkung unterstützt.

Die Haupterkenntnis der vorliegenden Erfindung ist jedoch darin zu sehen, daß durch die Zugabe von organischen Materialien mit hohem Klebergehalt mit spezifisch großer, sorptiver Oberfläche, nämlich feinst vermahlenen Getreiderückständen, wie sie beispielsweise in den Getreidemühlen anfallen, nach dem intensiven Vermischen aller Bestandteile ohne weitere Bearbeitungs- oder gar Zerkleinerungsmaßnahmen ein granuliertes Endprodukt mit einer feinkrümeligen Struktur erhalten wird, das lager-, umschlags-, transport- und streustabil ist, mit Scheibendüngerstreuern und ähnlichen Geräten ohne Staubentwicklung ausgebracht werden kann, Wasserhaushalt, Porosität, Krümelbildung und Krümelstabilität der Böden günstig beeinflußt, das Bodenleben aktiviert und sowohl schnell wirkende wie auch langsam wirkende Nährstoffe bereitstellt.

Für die hervorragende Granulatbildung des erfindungsgemäßen Verfahrensproduktes ist nach den durchgeführten Versuchen der Gehalt an organischen Klebern aus den Mahlrückständen in erster Linie verantwortlich. Eindeutig wirkt aber auch die Zugabe von Calciumoxid, welches gemäß einer vorteilhaften Ausgestaltung der Erfindung teilweise auch durch Magnesiumoxid ersetzt werden kann, durch Hydratisierung, Karbonatisierung und gegebenenfalls Sulfatbildung unterstützend. Die Sulfatbildung kann auch durch Zugabe von Calciumsulfat, vorzugsweise aus REA-Gips, unterstützt werden.

Gemäß einer Weiterbildung des erfindungsgemäßen Verfahrens können die aus dem Stand der Technik bekannten Materialien mit spezifisch großer, sorptiver Oberfläche, nämlich Sägemehl, Sägespäne, fein gehäckseltes oder vermahlenes Stroh und/oder Rindenhumus, ebenfalls zugegeben werden.

Während Klärschlamm üblicherweise nennenswerte Mengen von Stickstoff in Form von Ammonium enthält, ist dies bei anderen organischen Siedlungsabfällen meist nicht der Fall. Es kann sich daher empfehlen, zur Stickstoffanreicherung Harnstoff und/oder Ammoniumnitrat zuzumischen.

Zur Phosphoranreicherung kann es sich empfehlen, Monocalciumphosphat und/oder Dicalciumphosphat und/oder Tricalciumphosphat zuzumischen. Dabei empfehlen sich besonders die gefällten Phosphate aus der Abwasserreinigung.

Zur Kaliumanreicherung kann es sich empfehlen, Kaliumchlorid und/oder Kaliumsulfat zuzumischen.

Zur Schwefelanreicherung kann es sich empfehlen, Calciumsulfat, insbesondere in Form von REA-Gips, zuzumischen.

Zur Spurennährstoffanreicherung kann es sich empfehlen, Eisen, Kupfer, Zink, Mangan, Molybdän, Cobalt und/oder Bor in Form von pflanzenverträglichen Verbindungen zuzumischen.

Des weiteren liegt der vorliegenden Erfindung die Erkenntnis zugrunde, daß es nicht möglich ist, jeden beliebigen Boden und jede beliebige Kulturpflanze mit einem Einheitsdünger bzw. einem Einheits-Bodenverbesserungsmittel zu behandeln. Aus diesem Grunde werden bei der Mischung der verschiedenen Bestandteile zunächst die organischen Siedlungsabfälle analysiert, mit der Analyse der zu behandelnden Böden und den bekannten Bedürfnissen der zu düngenden Kulturpflanzen verglichen und danach dann Art und Menge der zuzumischenden Bestandteile bestimmt.

Da neben dem Gehalt des Düngers an Nährstoffen deren temporäre Pflanzenverfügbarkeit entscheidend ist, kann es sich empfehlen, dem Dünger auch Mineralisations- und/oder Nitrifikationshemmer zuzumischen, insbesondere im Hinblick auf den organisch gebundenen Stickstoff.

Wie sich herausgestellt hat, ist es bei der Durchführung des erfindungsgemäßen Verfahrens völlig ausreichend, alle gemäß Analyse zuzugebenden Stoffe in einem Mischer ausreichend intensiv zu vermischen und zu granulieren. Granulate von oberhalb 0 bis 20 mm und mit einem Feuchtigkeitsgehalt von bis zu 60 Gew.% haben sich als optimal herausgestellt. Zu grobe oder zu feine Granulate werden in den Kreislauf zurückgeführt. Die entstehenden Granulate werden auf Körnung gesiebt, Über- oder Unterkorn wird in den Kreislauf zurückgeführt.

Mit Hilfe des erfindungsgemäßen Verfahrens gelingt es also, den in den Kläranlagen reichlich anfallenden Klärschlamm und die ebenfalls reichlich anfallenden sonstigen organischen Siedlungsabfälle gezielt zu einem Düngemittel für Kulturpflanzen und zu einem Verbesserungsmittel für Böden zu verarbeiten, bei dem auch ohne gezielte Zugabe von Stickstoffverbindungen neben dem enthaltenen NH₄ im Jahr der Anwendung bereits ca. 20 % des organisch gebundenen Stickstoffs den Kulturpflanzen zur Verfügung steht. Darüber hinaus lassen sich infolge des hohen Calciumgehalts, entsprechend 20 bis 30 % CaO, Ackerböden und insbesondere auch saure Waldböden gezielt aufkalken, wobei die Nährstoffe zu einer Kräftigung des Pflanzenwachstums und einer Beseitigung der bereits eingetretenen Boden- und Pflanzenschäden beitragen.

## Patentansprüche

1. Verfahren zum Herstellen eines Düngemittels für Kulturpflanzen und Verbesserungsmittels für Böden durch intensives, gezieltes Vermischen und anschließendes Granulieren von organischen Siedlungsabfällen, darunter jedenfalls Klärschlamm, mit organischem Material mit spezifisch großer, sorptiver Oberfläche, darunter jedenfalls feinstvermahlene Getreiderückstände mit hohem Klebergehalt, mineralischen Nährstoffträgern und basisch wirkende Stoffen, darunter jedenfalls Calciumoxid.

2. Verfahren nach Anspruch 1, gekennzeichnet durch das Merkmal:
- als weiterer Bestandteil wird Sägemehl zugegeben.

3. Verfahren nach Anspruch 1, gekennzeichnet durch das Merkmal:
- als weiterer Bestandteil werden Sägespäne zugegeben.

4. Verfahren nach Anspruch 1, gekennzeichnet durch das Merkmal:
- als weiterer Bestandteil wird fein gehäckseltes oder vermahlenes Stroh zugegeben.

5. Verfahren nach Anspruch 1, gekennzeichnet durch das Merkmal:
- als weiterer Bestandteil wird Rindenhumus zugegeben.

6. Verfahren nach einem der Ansprüche 1 bis 5, gekennzeichnet durch das Merkmal:
- ein Teil des Calciumoxids wird zur Magnesiumanreicherung durch Magnesiumoxid und/oder Magnesiumsulfat ersetzt.

7. Verfahren nach einem der Ansprüche 1 bis 6, gekennzeichnet durch das Merkmal:
- zur Stickstoffanreicherung werden Harnstoff und/oder Ammoniumnitrat vor dem Granulieren zugemischt.

8. Verfahren nach einem der Ansprüche 1 bis 7, gekennzeichnet durch das Merkmal:
- zur Phosphoranreicherung wird Mono-, Di- und/oder Tricalciumphosphat vor dem Granulieren zugemischt.

9. Verfahren nach Anspruch 8, gekennzeichnet durch das Merkmal:
- es werden gefällte Phosphate aus der Abwasserreinigung zugegeben.

10. Verfahren nach einem der Ansprüche 1 bis 9, gekennzeichnet durch das Merkmal:
- zur Kaliumanreicherung werden Kaliumchlorid und/oder Kaliumsulfat vor dem Granulieren zugemischt.

11. Verfahren nach einem der Ansprüche 1 bis 10, gekennzeichnet durch das Merkmal:
- zur Schwefelanreicherung und Verbesserung der Granulatbildung wird Calciumsulfat vor dem Granulieren zugemischt.

12. Verfahren nach Anspruch 11, gekennzeichnet durch das Merkmal:
- das Calciumsulfat wird in Form von REA-Gips zugegeben.

13. Verfahren nach einem der Ansprüche 1 bis 12, gekennzeichnet durch das Merkmal:
- zur Spurennährstoffanreicherung werden Eisen, Kupfer, Mangan, Molybdän, Cobalt, Bor und/oder Zink in Form von
pflanzenverträglichen Verbindungen vor dem Granulieren zugemischt.

14. Verfahren nach einem der Ansprüche 1 bis 13, gekennzeichnet durch das Merkmal:
- zur Einstellung der Pflanzenverfügbarkeit des organisch gebundenen Stickstoffs werden Mineralisations- und/oder Nitrifikationshemmer vor dem Granulieren zugemischt.

15. Verfahren nach einem der Ansprüche 1 bis 14, gekennzeichnet durch die Merkmale:
- alle Bestandteile werden nach dem Homogenisieren und Granulieren nach Granulatgröße gesiebt,
- zu grobe und zu feine Granulate werden in den Kreislauf zurückgeführt.

16. Verfahren nach einem der Ansprüche 1 bis 15, gekennzeichnet durch das Merkmal:
- die mineralischen Nährstoffträger und/oder basisch wirksamen Stoffe können einzeln oder aber bereits in Kombination vorgemischt vor dem Granulieren zugeführt werden.

17. Verfahren nach einem der Ansprüche 1 bis 16, gekennzeichnet durch die Merkmale:
- die Granulatdurchmesser werden oberhalb 0 mm bis 20 mm eingestellt,
- die Wassersättigung der Granulate wird mit etwa 0 bis 60
Gew.% dem jeweiligen Einsatzbereich angepaßt.

## Claims

1. A method for producing a fertiliser for cultivated plants and a soil conditioner by intensive, selective mixing and subsequent granulation of organic urban waste, including at least sewage sludge, with organic material with a specific large sorptive surface area, including at least finely ground grain residues with a high gluten content, mineral nutrient carriers and basically active substances, including at least calcium oxide.

2. A method according to Claim 1, characterised by the feature:
- of adding sawdust as a further constituent.

3. A method according to Claim 1, characterised by the feature:
- of adding saw chippings as a further constituent.

4. A method according to Claim 1, characterised by the feature:
- of adding finely chopped or ground straw as a further constituent.

5. A method according to Claim 1, characterised by the feature:
- of adding bark humus as a further constituent.

6. A method according to any one of Claims 1 to 5, characterised by the feature:
- of replacing a part of the calcium oxide with magnesium oxide and/or magnesium sulphate for the purpose of magnesium enrichment.

7. A method according to any one of Claims 1 to 6, characterised by the feature:
- of admixing, prior to granulation, urea and/or ammonium nitrate for the purpose of nitrogen enrichment.

8. A method according to any one of Claims 1 to 7, characterised by the feature:
- of admixing, prior to granulation, mono, di and/or tricalcium phosphate for the purpose of phosphorus enrichment.

9. A method according to Claim 8, characterised by the feature:
- of adding precipitated phosphates from waste water purification.

10. A method according to any one of Claims 1 to 9, characterised by the feature:
- of admixing, prior to granulation, potassium chloride and/or potassium sulphate for the purpose of potassium enrichment.

11. A method according to any one of Claims 1 to 10, characterised by the feature:
- of admixing, prior to granulation, calcium sulphate for the purpose of sulphur enrichment and to improve granulation.

12. A method according to Claim 11, characterised by the feature:
- of adding calcium sulphate in the form of gypsum from flue gas desulphurisation plants.

13. A method according to any one of Claims 1 to 12, characterised by the feature:
- of admixing, prior to granulation, iron, copper, manganese, molybdenum, cobalt, boron and/or zinc in the form of non-phytotoxic compounds for the purpose micronutrient enrichment.

14. A method according to any one of Claims 1 to 13, characterised by the feature:
- of admixing, prior to granulation, mineralisation and/or nitrification inhibitors to adjust the availability of organically bound nitrogen.

15. A method according to any one of Claims 1 to 14, characterised by the features:
- of screening, after homogenisation and granulation, all the constituents according to granule size,
- of returning excessively coarse and excessively fine granules to the circuit.

16. A method according to any one of Claims 1 to 15, characterised by the feature:
- that the mineral nutrient carriers and/or basically active substances can be fed individually or else already premixed in combination, prior to granulation.

17. A method according to any one of Claims 1 to 16, characterised by the features:
- of adjusting the granule diameter above 0 mm to 20 mm,
- of adapting the water saturation of the granules at approximately 0 to 60 % by weight of the respective application range.

## Revendications

1. Procédé de fabrication d'un engrais pour les plantes cultivées et d'un amendement pour sols par mélange ciblé intensif suivi d'une granulation d'ordures ménagères organiques, y compris en tout cas les boues de stations d'épuration, avec des matières organiques présentant une surface sorbante de taille spécifique, y compris en tout cas des résidus de céréales finement moulus à haute teneur en gluten, des substrats de nutriments minéraux et des substances à activité basique, y compris en tout cas l'oxyde de calcium.

2. Procédé selon la revendication 1, caractérisé en ce que l'on ajoute, en tant que composant supplémentaire, de la sciure de bois.

3. Procédé selon la revendication 1, caractérisé en ce que l'on ajoute, en tant que composant supplémentaire, du bran de bois.

4. Procédé selon la revendication 1, caractérisé en ce que l'on ajoute, en tant que composant supplémentaire, de la paille hachée fine ou moulue.

5. Procédé selon la revendication 1, caractérisé en ce que l'on ajoute, en tant que composant supplémentaire, de l'humus d'écorce.

6. Procédé selon l'une des revendications 1 à 5, caractérisé en ce que, à des fins d'enrichissement en magnésium, on remplace une partie de l'oxyde de calcium par de l'oxyde de magnésium et/ou du sulfate de magnésium.

7. Procédé selon l'une des revendications 1 à 6, caractérisé en ce que, à des fins d'enrichissement en azote, on incorpore au mélange avant granulation de l'urée et/ou du nitrate d'ammonium.

8. Procédé selon l'une des revendications 1 à 7, caractérisé en ce que, à des fins d'enrichissement en phosphore, on incorpore au mélange avant granulation du phosphate mono-, di- et/ou tricalcique.

9. Procédé selon la revendication 8, caractérisé en ce que l'on ajoute des phosphates précipités issus de la décantation des eaux d'égout.

10. Procédé selon l'une des revendications 1 à 9, caractérisé en ce que, à des fins d'enrichissement en potassium, on incorpore au mélange avant granulation du chlorure de potassium et/ou du sulfate de potassium.

11. Procédé selon l'une des revendications 1 à 10, caractérisé en ce que, à des fins d'enrichissement en soufre et dans le but d'améliorer la formation des granulés, on incorpore au mélange avant granulation du sulfate de calcium.

12. Procédé selon la revendication 11, caractérisé en ce que le sulfate de calcium est ajouté sous forme de plâtre de désulfuration des gaz de fumée.

13. Procédé selon l'une des revendications 1 à 12, caractérisé en ce que, à des fins d'enrichissement en oligo-éléments, on incorpore au mélange avant granulation du fer, du cuivre, du manganèse, du molybdène, du cobalt, du bore et/ou du zinc sous forme de composés non phytotoxiques.

14. Procédé selon l'une des revendications 1 à 13, caractérisé en ce que, afin d'ajuster la disponibilité pour les plantes de l'azote lié organiquement, on incorpore au mélange avant granulation des inhibiteurs de minéralisation et/ou de nitrification.

15. Procédé selon l'une des revendications 1 à 14, caractérisé en ce que tous les composants sont tamisés après homogénéisation et granulation en fonction de la taille des granulés ; et les granulés trop gros et trop fins sont réintroduits dans le circuit.

16. Procédé selon l'une des revendications 1 à 15, caractérisé en ce que l'apport des substrats de nutriments minéraux et/ou des substances à activité basique peut avoir lieu avant granulation soit isolément, soit déjà sous la forme d'une association résultant d'un prémélange.

17. Procédé selon l'une des revendications 1 à 16, caractérisé en ce que les diamètres des granulés sont réglés de manière à se situer entre 0 mm et 20 mm ; et la saturation en eau des granulés est fixée d'environ 0 % à 60 % en poids selon les besoins du domaine d'application concerné.
